# EUROPEAN PATENT APPLICATION

(11) **EP 4 835 760 A1**
(43) Date of publication of application: **04.11.2026**
(21) Application number: 26159942.7
(22) Date of filing: 20.02.2026
(51) Int. Cl.: G06Q 10/047, G06Q 50/40, G08G 1/00

(54) **METHOD AND SYSTEM FOR REAL-TIME DYNAMIC CONTROL OF A VEHICLE FLEET WITH ITERATIVE RESOURCE OPTIMIZATION**

(71) Applicant: Onyx Spolka Z Ograniczona Odpowiedzialnoscia, 80-174 Gdansk Pomorskie (PL)
(72) Inventor: Mirowski, Adrian, Kwidzyn, 82-500 (PL)

(57) **Abstract**

A computer-implemented method and control system for real-time dynamic management of a distributed fleet of road vehicles. The system acts as a closed-loop controller that ingests asynchronous sensor data streams from vehicle telematics, including digital tachograph states, and converts them into executable control signals for onboard units. To overcome the computational complexity of the NP-hard routing problem within a deterministic real-time latency (e.g., under two minutes), the system employs an adaptive heuristic engine with a warm-start memory mechanism. This mechanism persists search-graph states and validity labels between iterations, invalidating only those graph branches affected by new sensor data. This selective re-optimization significantly reduces CPU cycles and ensures the output of feasible control plans synchronous with the physical state of the fleet. Communication bandwidth is minimized by transmitting delta-encoded control instructions. The system guarantees operational safety by enforcing hard constraints derived from hardware certification and legal driving time limits.

## Description

### Field of the Invention

The invention relates to real-time control systems for distributed physical assets. More specifically, it concerns a computer-implemented method and apparatus for the dynamic control of vehicle fleets, involving the processing of high-frequency sensor data streams and the generation of control signals under strict deterministic latency and real-time legal/regulatory compliance constraints.

### Background

Controlling a large fleet of vehicles in real-time presents a significant technical challenge due to the computational complexity of the Vehicle Routing Problem (VRP), which is NP-hard. Conventional systems typically rely on batch processing that requires significant CPU time (hours), rendering the resulting plans obsolete by the time they are computed due to the dynamic nature of traffic and vehicle status. Existing real-time approaches often resort to simplified greedy algorithms that sacrifice global efficiency for speed.

A critical technical problem is the latency between a change in the physical system state (such as live digital tachograph statuses and cabotage limits) directly into a persistent search-graph,and the generation of a corrective control signal. On standard computing hardware, re-calculating a complete global optimization from scratch for every state change creates a computational bottleneck that violates real-time constraints. Furthermore, frequent transmission of full plan updates saturates wireless communication bandwidth. There
is a need for a control architecture that can maintain a globally optimized state within a deterministic time bound (e.g., < 2 minutes) while minimizing computational load and data transmission volume.

### Summary of the Invention

The present invention provides a computer-implemented control system that maintains a synchronized digital twin of the fleet state and generates executable control signals within a guaranteed time window. The system solves the computational bottleneck through an integrated architecture comprising four distinct technical pillars:
**1. Differential Graph Persistence (Warm-Start):** The engine maintains a persistent graph representation in memory where search labels, cost matrices, and validity indices are cached.
**2. Deterministic Latency via Watchdog Preemption:** The system employs a hardware or software watchdog timer that preemptively terminates the combinatorial optimization process, ensuring a feasible control signal is emitted before the strict time deadline, preventing system deadlocks.
**3. Regulatory Integration in RCSP:** Legal rules (tachograph driving limits, mandatory breaks, cabotage counters) are embedded as internal resource constraints within a Resource-Constrained Shortest Path framework, immediately pruning search branches that lead to legal violations.
**4. Delta Updates & ACK Reconciliation:** The system achieves bandwidth efficiency and reliable synchronization by transmitting only delta-encoded instructions over the cellular network and verifying execution via a closed-loop acknowledgement protocol.

This intersection of warm-start graph persistence, watchdog preemption, regulatory constraint integration, and delta-encoded communication represents a distinct technical advancement over "best-effort" search systems, enabling high-frequency control loops on standard hardware

### Definitions

**Unstarted order:** a transport order for which execution by a vehicle has not yet begun at the time of an optimisation iteration.

**Started assignment:** a vehicle task already in execution (e.g., departed pickup or in-transit), which remains fixed during iterations to preserve operational safety.

**Decision-time bound:** a predefined maximum wall-clock time for emitting a feasible plan in each iteration; in preferred embodiments not exceeding two minutes.

### Description - ONYX - Page 1

### Brief Description of the Drawings

Fig. 1 is a schematic block diagram of the control system architecture (100), illustrating the hardware interfaces for sensor data ingestion (110, 115), the central processing unit executing the planning engine (120) with its associated memory states (125), and the communication gateway (140) interacting with remote onboard units (150)
**Fig. 2** is a logic flow diagram illustrating the real-time control loop, specifically showing the transition from asynchronous event ingestion to the generation of synchronous control signals.

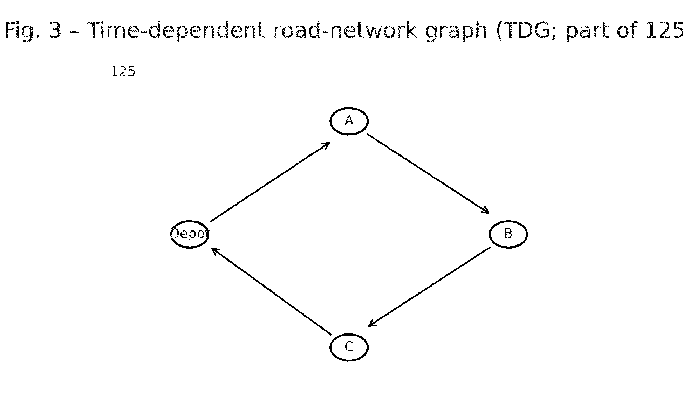

**Fig. 3** illustrates the graph data structure representation in memory, where nodes and arcs are annotated with dynamic resource constraints and time-dependent weights.
**Fig. 4** depicts the data transformation process for generating candidate trip objects from vehicle state vectors using a Resource-Constrained Shortest Path (RCSP) algorithm.
**Fig. 5** is a state transition diagram showing the global re-optimization process, highlighting the warm-start feedback loop where cached graph states are reused to minimize computational load.
**Fig. 6** illustrates the communication protocol sequence between the gateway and onboard units, emphasizing the delta-update mechanism and acknowledgement reconciliation.
**Fig. 7** is a histogram showing the distribution of computational latency, demonstrating the system's adherence to the deterministic decision-time bound.
**Fig. 8** is a comparative chart demonstrating the improvement in resource efficiency (reduction in non-productive distance) achieved by the proposed control method.

### Detailed Description

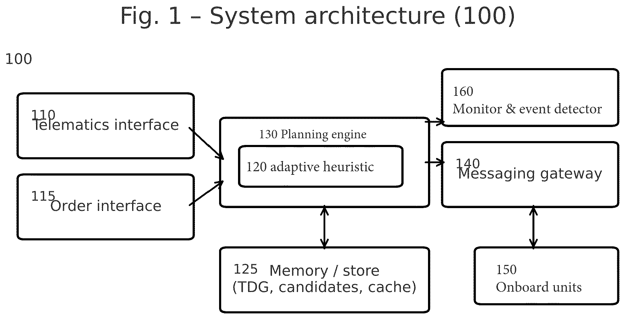

### 1. System Overview (Fig. 1)

The system (100) is implemented as a computerized control apparatus comprising: a telematics interface (110) acting as a hardware abstraction layer to ingest high-frequency sensor data streams (geographic coordinates, speed, digital tachograph states); an input interface (115) for defining control targets (transport tasks); and a central planning engine (120) executed on one or more processors. The engine is tightly coupled with a high-speed memory/store (125) configured to hold the dynamic graph data structure and cached search trees (labels and indices). A bidirectional messaging gateway (140) manages the transmission of binary or text-based control protocols to remote onboard units (150) installed in the vehicles, while a monitor (160) acts as a watchdog timer and event detector to trigger control loops.

### 2. Data Model and Constraints

1 **Transport Tasks (formerly Orders):** pickup/delivery nodes defined as control targets with hard time windows [a,b], service durations, payload attributes, precedence constraints, and priority weights.
2 **Vehicles:** represented as state vectors containing capacity limits (volume and weight), current geographic location, availability windows, equipment/certification flags, and driver fuel/energy profiles.
3 **Regulatory & legal constraints:** driver working hours and mandatory breaks derived from tachograph data; cabotage rules; legal transit restrictions; speed limits; cargo-specific certification and equipment requirements.
4 **Time-dependent road-network graph:** a directed graph data structure stored in memory where arc weight functions represent physical parameters (travel time, distance, energy consumption) dependent on the departure time and predictive traffic state.
5 **Objective:** in each iteration, the engine minimizes a Resource Consumption Metric (J) of the current joint assignment.,The metric is defined as a weighted linear combination of physical system variables: J = w1·TravelTime + w2·Distance + w3·FleetUtilizationPenalty with positive weights w1, w2, w3 acting as system parameters tuned to maximize operational efficiency, avoiding economic definition).

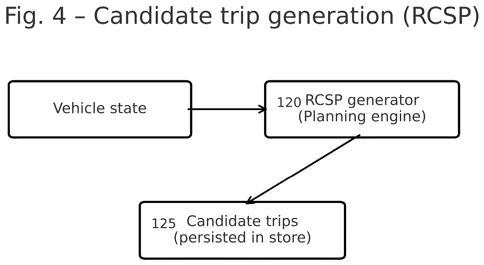

### 3. Candidate Trip Generation (Fig. 4)

For each vehicle, candidate trips are generated by the engine (120) executing a Resource-Constrained Shortest Path (RCSP) algorithm on the time-dependent graph. Labels associated with graph nodes carry accumulated resource states (elapsed time, remaining legal driving time from tachograph, residual load capacity).

**Graph Pruning:** Arc traversal is strictly prohibited if it results in a violation of any hard constraint (e.g., exceeding legal driving time), effectively pruning the search space to ensure safety. **Persistence:** Computed labels, dominance rules, and adjacency indices for valid candidate trips are persisted in the memory/store (125). This persistence enables the warm-start mechanism in subsequent iterations.

### 4. Initial Plan Construction

The planning engine initializes the control loop by computing a joint assignment of all unstarted transport tasks to the available vehicles. This phase produces an initial feasible global plan that satisfies all hard constraints. If full coverage is not computationally feasible within the initialization window, the solver prioritizes tasks based on deadline proximity, marking unassigned tasks for immediate processing in the subsequent iterative improvement phase.

### 5. Adaptive Iterative Improvement

The optimisation engine executes a trajectory refinement procedure by exploring the solution space through local search operators (e.g., insertion, swap, re-sequencing, cross-exchange, and route split/merge).

**Memory-Based Heuristic:** The module maintains a short-term memory of recently evaluated state vectors to prevent cyclic computations. Parameter control (e.g., mutation rate, acceptance criteria) is adapted dynamically based on the convergence rate of the resource consumption metric.

**Deterministic Termination:** Crucially, the iterative process is governed by a watchdog timer. The optimization is preemptively terminated upon reaching the strict decision-time bound (e.g., < 120 seconds). At this interrupt, the best valid state vector currently in memory is serialized and emitted as the control signal, guaranteeing that the system always provides a feasible plan within the real-time window.

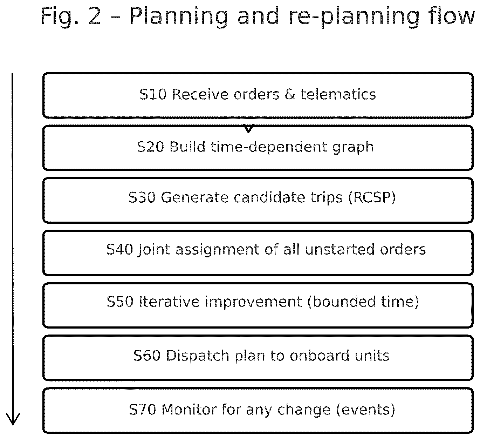

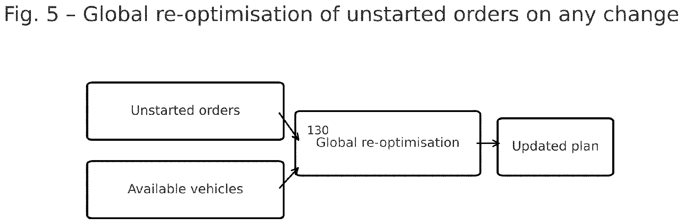

### 6. Event-Driven Global Re-Optimisation (Fig. 2, Fig. 5)

Any detected change in the physical system state-including the ingestion of a new transport task, a predicted delay, a driver duty-status update from the tachograph interface, or a vehicle availability change-triggers an immediate interrupt. Unlike conventional solvers that re-initialize the search from scratch (cold-start), the claimed system utilizes a differential update strategy. When a new state is introduced, the engine identifies the specific delta between the previous graph and the current requirements. The system prunes invalid branches of the search tree that no longer satisfy the updated physical or regulatory constraints (such as a sudden reduction in remaining driving time reported by the tachograph), while retaining and refining the branches that remain feasible. This reduces the computational complexity of re-planning from exponential to near-linear relative to the scope of the disruption.

### Technical Implementation of the Warm-Start Mechanism:

Unlike conventional solvers that re-initialize the search from scratch, the claimed system utilizes a differential update strategy. The memory/store (125) persists the search tree structure, label costs, and feasibility indices from the previous valid iteration. When an event occurs, the system identifies the specific graph nodes and vehicle trajectories invalidated by the new data. The engine "prunes" only these invalid branches while retaining the computed states for unaffected resources. The search then resumes from this preserved state. This approach reduces the computational complexity of re-planning from quadratic/exponential (in cold-start scenarios) to near-linear relative to the scope of the disruption, enabling high-frequency control loops on standard hardware.

### 7. Decision-Time Guarantee & Watchdog Preemption

To function as a real-time controller, the engine enforces deterministic time bounds. This is achieved by dynamically capping the search horizon and limiting the depth of neighbourhood expansion based on the remaining time budget.

Preferred Embodiment: The system is configured to emit a feasible plan within a predefined latency, preferably ≤ 2 minutes. This guarantees that the digital plan remains synchronized with the physical reality of the fleet, preventing the "stale plan" problem common in batch processing systems.

In safety-critical and high-reliability logistics, "best-effort" computation is a significant operational risk. To function as a real-time controller, the engine enforces deterministic time bounds. The iterative process is governed by a windowed watchdog timer mechanism. The optimization is preemptively terminated upon reaching a strict decision-time bound (preferably ≤ 2 minutes). At this hardware- or software-triggered interrupt, the best valid state vector currently in memory (the "incumbent") is serialized and emitted as the control signal. This guarantees that the fleet is never deadlocked by computational stalls and that the digital plan remains synchronized with the physical reality of the fleet.

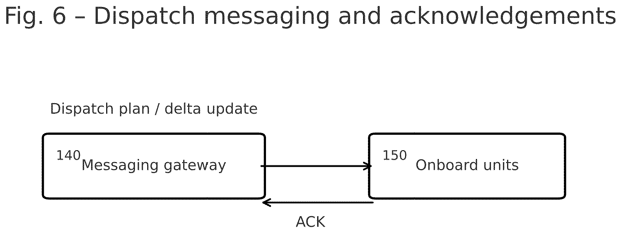

### 8. Dispatch Messaging and Reconciliation (Fig. 6)

The messaging gateway (140) translates the computed plan into machine-readable control sequences.

**Bandwidth Optimization:** To minimize data transmission over cellular networks, the gateway computes the difference between the vehicle's current instruction set and the new plan. Only delta updates (e.g., "Remove Stop A, Insert Stop B at time T") are transmitted.

**Control Loop Closure:** The system requires positive acknowledgements (ACK) from onboard units (150). These ACKs are reconciled against the state store. If a heartbeat or ACK is missing, the system isolates the affected vehicle from the optimization pool to prevent conflicting instructions, ensuring fail-safe operation.

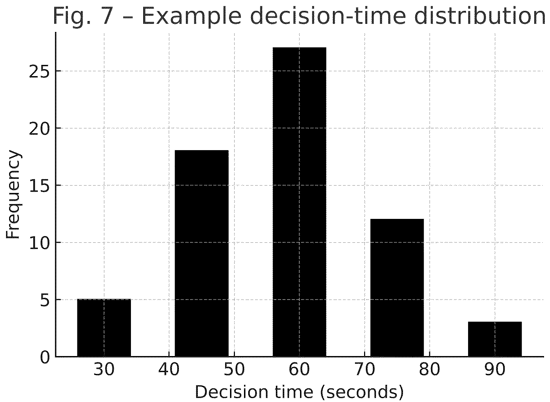

### 9. Example Operation and Technical Effects (Fig. 7-8)

In representative deployments, the system generates feasible fleet control plans within two minutes for large instances (~300 vehicles), a process that conventionally requires hours of computation.

### Technical Advantages:

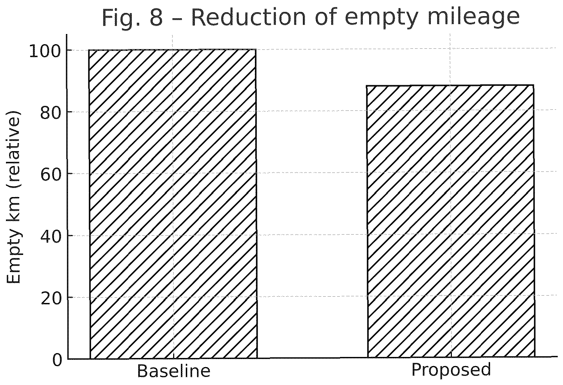

1. Latency Reduction: Continuous re-planning reduces the reaction time to external disturbances (traffic, delays) from hours to minutes.
2. Resource Efficiency: Global joint optimization reduces the total driven distance and fuel consumption by approximately 10-15% compared to baseline sequential assignment methods, as shown in Fig. 8.
3. CPU Load Management: The warm-start mechanism reduces the average processor utilization required per iteration, allowing the system to scale.

### 10. Variations and Extensions

1 Energy Constraints: Support for battery-electric vehicles by modeling State of Charge (SoC) as a depletable resource on graph arcs, with charging stations defined as refill nodes.
2 Multi-depot and intermodal legs; prioritisation policies via weight tuning.
3 Network Robustness: Evaluation of plan robustness by applying penalty functions to arcs with high variance in historical travel times.
4 Protocol Adaptation: The messaging gateway supports variable bandwidth-aware protocols, automatically adjusting the granularity of delta updates based on network quality.

### Industrial Applicability

The invention is applicable to the automated technical control of distributed logistics fleets, including long-haul transport, regional distribution, and emergency response coordination, where real-time synchronization between a central planner and mobile units is required.

### Reference Signs

1 100 system
2 110 telematics interface
3 115 input interface
4 120 planning engine
5 125 memory/store (includes TDG, candidates, caches)
6 130 adaptive heuristic optimisation module
7 140 messaging gateway
8 150 onboard unit
9 160 monitor and event detector

## Claims

1. A computer-implemented method for dynamic planning and continuous control of a fleet of road vehicles, executed by one or more processors, comprising:
• receiving transport tasks with pickup and delivery locations, time windows and service constraints;
• receiving, in real time, telematics data from vehicles including geographic position, speed, driver duty status obtained from a digital tachograph interface, remaining legal driving time, load capacity, equipment and certification data;
• maintaining a time-dependent road-network graph with arc weights derived from predicted travel times, speed limits and traffic conditions;
• generating candidate trips for vehicles subject to mandatory physical and regulatory constraints including driver working hours, cabotage rules, vehicle technical configuration, load capacity, and legal transit restrictions;
• computing a joint assignment of unstarted transport tasks to available vehicles, wherein in each iteration the planning engine optimizes a resource consumption metric of the current assignment, defined as a weighted combination of physical parameters including travel time, driven distance and fleet utilization;
• **maintaining search-graph states, including labels and adjacency indices, in a persistent memory cache, whereby any detected change in system state triggers a differential re-optimization iteration that reuses said cached states and prunes only invalidated branches of the search tree while keeping already executing assignments fixed;**
• **terminating the optimization iteration preemptively upon reaching a strict, predefined decision-time bound governed by a watchdog timer mechanism to output a feasible control signal within a deterministic latency;**
• **transmitting dispatch control messages to onboard units, wherein said messages are transmitted as delta-encoded updates relative to a previous plan state to minimize communication bandwidth usage.**

2. The method of claim 1, wherein said decision-time bound is set to a value not exceeding five minutes, and preferably not exceeding two minutes, to ensure real-time responsiveness.

3. The method of claim 1, wherein predicted travel times are obtained by combining historical and live traffic data streams.

4. The method of claim 1, wherein arc weights further comprise fuel or energy consumption calculated as a function of vehicle load and speed.

5. The method of claim 1, wherein driver working hour constraints are dynamically updated based on real-time data streams from the digital tachograph.

6. The method of claim 1, wherein cabotage rules are applied by restricting assignment of cross-border tasks according to jurisdictional limits encoded in the graph constraints.

7. The method of claim 1, wherein vehicle certification and equipment constraints are validated against mandatory cargo requirements.

8. The method of claim 1, wherein dispatch control messages comprise route segments, task sequences and delivery deadlines, and are acknowledged by onboard units to close the control loop.

9. A system for dynamic planning and continuous control of a vehicle fleet, comprising:
• a telematics interface configured to ingest real-time vehicle and traffic data;
• a memory storing a time-dependent road-network graph, transport tasks, cached optimization structures, and vehicle state;
• a planning engine configured to perform the method of any of claims 1-8; and
• a messaging gateway configured to transmit dispatch control messages to onboard units as delta-encoded updates and reconcile acknowledgements.

10. The system of claim 9, wherein the planning engine comprises an adaptive heuristic optimization module that performs joint re-optimization of unstarted tasks whenever a change in system state is detected.

11. The system of claim 9, wherein the planning engine is configured to enforce the deterministic time bound by truncating the heuristic search space.

12. The system of claim 9, wherein the messaging gateway retries delivery of control messages until acknowledgement is received, freezing the plan for the affected vehicle if acknowledgement is missing.

13. A non-transitory computer-readable medium storing instructions that, when executed by a processor, cause the processor to perform the method of any of claims 1-8
